Europäisches Patentamt

European Patent Office

Office européen des brevets

(11) Publication number: **0 320 169 B1**

## EUROPEAN PATENT SPECIFICATION

(45) Date of publication of patent specification: **05.01.94**   (51) Int. Cl.[5]: **C08F 4/64**, C08F 10/00

(21) Application number: **88311369.8**

(22) Date of filing: **30.11.88**

(54) **Catalysts prepared from tetrakis (dialkylamide and diarylamide) derivatives of titanium and polymerization of olefins therewith.**

(30) Priority: **30.11.87 US 126331**
**25.08.88 US 236691**

(43) Date of publication of application:
**14.06.89 Bulletin 89/24**

(45) Publication of the grant of the patent:
**05.01.94 Bulletin 94/01**

(84) Designated Contracting States:
**BE DE ES FR GB IT NL SE**

(56) References cited:
**DE-A- 2 030 753**
**US-A- 3 734 899**

(73) Proprietor: **THE DOW CHEMICAL COMPANY**
**2030 Dow Center**
**Abbott Road**
**P.O. Box 1967**
**Midland Michigan 48640-1967(US)**

(72) Inventor: **Hefner, John G.**
**122 Cacao**
**Lake Jackson Texas 77566(US)**

(74) Representative: **Burford, Anthony Frederick et al**
**W.H. Beck, Greener & Co.**
**7 Stone Buildings**
**Lincoln's Inn**
**London WC2A 3SZ (GB)**

Rank Xerox (UK) Business Services
(3.10/3.9/3.3.3)

EP 0 320 169 B1

**Description**

The present invention pertains to supported catalysts containing tetrakis(dialkylamide or diarylamide) derivatives of titanium, zirconium and hafnium useful for polymerizing olefins.

The use of some tetrakis(dialkylamide or diarylamide) derivatives of titanium in the Ziegler-Natta catalyzed polymerization of $\alpha$-olefins is known. These polymerizations, however, have been conducted only at low temperatures up to about 150°C. It would be desirable to have catalysts which are operable at higher temperatures so as to be useful in the solution polymerization of $\alpha$-olefins.

DE-A-2030753 (corresponding to US-A-4562197) discloses a Ziegler-Natta catalyst prepared by mixing a catalyst-forming component which is a hydride or organo-metallic compound of a Mendelyeev Group I to III metal with a specific supported catalyst-forming component. Exemplified organo-metallic compounds include aluminum trialkyls, aluminum dialkyl halides, and lithium alkyls. In the exemplified process, the hydride or organo-metallic compound is mixed with the supported catalyst-forming component in an inert diluent. The supported catalyst-forming component can be obtained by contacting a titanium tetrakis-(dihydrocarbylamide) with an active anhydrous magnesium dihalide. Although it is preferred that said contacting is by dry co-grinding, the titanium compound and preground magnesium dihalide can be mixed in an inert solvent or diluent. Normal magnesium dihalide apparently cannot be used in the process of DE-A-2030753 to obtain a satisfactory Ziegler-Natta catalyst.

The present invention provides catalyst compositions which are useful for the polymerization of olefins at both low and high temperatures under either slurry or solution polymerization conditions and also provides catalyst compositions for producing polymers of narrow or broad molecular weight distributions, depending on the compositions employed. One particular advantage of the catalysts of the present invention over those of the prior art is the production of high surface area supported catalysts without the use of energy intensive ball milling and/or grinding of the supported compositions. Another advantage is a reduction in the number of additives required to produce efficient catalysts as required in the prior art employing tetrakis(dimethylamino)silane solutions in catalyst compositions. Another advantage is the preparation of high efficiency catalyst compositions which eliminates the need to remove catalyst residues from the resin products.

A first broad aspect of the invention is a process for preparing a supported catalyst which comprises mixing in a suitable inert diluent or solvent the following components A, B, and C:

(A) an inorganic support;

(B) a metal-containing reducing agent of the formula $Al(R')_{3-m}X_m$ or $B(R')_{3-m}X_m$ wherein each R' is independently hydrogen or a hydrocarbyl group having 1 to 20 carbon atoms, X is halogen and m has a value from 2 to 2; and

(C) a transition metal compound selected from a titanium tetrakis(dialkylamide) or titanium tetrakis-(diarylamide) or a combination thereof;

characterized in that the addition of said transition metal compound (C) is delayed until all of said support (A) and reducing agent (B) have been added and wherein the components are employed in quantities which provide an atomic ratio of Ms:Tm of from 2:1 to 160:1; an atomic ratio of Mr:Tm of from 1:1 to 64:1; and wherein Ms represents the metal atoms in the support material, Mr represents the metal atoms in the reducing agent and Tm represents the sum of the transition metal atoms in the transition metal component.

Preferably, the atomic ratio of Ms:Tm is from 8:1 to 80:1, especially from 11:1 to 40:1, and the atomic ratio of Mr:Tm is from 2:1 to 32:1, especially from 4:1 to 16:1.

A second broad aspect of the invention is a process for polymerizing one or more $\alpha$-olefins or a mixture of one or more $\alpha$-olefins and one or more polymerizable ethylenically unsaturated monomers which process comprises conducting the polymerization under solution conditions in the presence of

(I) a supported catalyst prepared by the process of the invention; and

(II) a cocatalyst or activator compound.

The transition metal tetrakis(dialkyl- or diarylamides) are commercially available, or they can be prepared by reacting a dialkyl- or diarylamine such as those wherein the alkyl groups have from 1 to 4 carbon atoms with a lithium alkyl compound such as n-butyllithium in a suitable solvent at a temperature from -100°C to reflux with the most suitable method being reacting the secondary amine with the lithium alkyl at or below -20°C followed by the addition of a transition metal halide and refluxing the mixture for 0.1 to 48 hours with the most suitable reflux time being from 1 to 2 hours. Suitable solvents include, for example, aromatic hydrocarbons, ethers, cyclic ethers, aliphatic hydrocarbons, industrial solvents such as paraffinics, and kerosenes. Particularly suitable solvents include, for example, diethyl ether, hexane, heptane, octane, toluene and tetrahydrofuran, and combinations thereof.

This method is fully described by Bradley, D. C. and Thomas, I. M., J. Chem. Soc. (1960), 3857 and Chandra, D. and Lappert, M. F., J. Chem. Soc. (A), (1968), 1940.

Suitable titanium tetrakis(dialkylamides or diarylamides) which can be employed herein, include, for example, those represented by the formula $Ti(NR_2)_4$ wherein each R is independently an alkyl group having from 1 to 4 carbon atoms, a benzyl group, a phenyl group, an alkyl benzyl group wherein each alkyl group has from 1 to 4 carbon atoms, most suitably from 1 to 3 carbon atoms, or an alkyl substituted aryl group having from 7 to 20 carbon atoms, most suitably from 7 to 11 carbon atoms wherein the alkyl groups have from 1 to 14 carbon atoms, most suitably from 1 to 5 carbon atoms. Particularly suitable titanium tetrakis-(dialkylamides or diarylamides) include titanium tetrakis(dimethylamide), titanium tetrakis(dibenzylamide), titanium tetrakis(diethylamide), titanium tetrakis(diphenylamide), titanium tetrakis(di-n-propylamide), titanium tetrakis(di-i-propylamide), titanium tetrakis(di-i-butylamide), titanium tetrakis (di-n-butylamide), titanium bis-(diethylamide) bis(dimethylamide), titanium (di-i- propylamide) tris(dimethylamide) and any other combinations of alkyl- or arylamide groups limited only by the steric properties of the complex.

In addition to the titanium tetrakis(dialkylamides or diarylamides) which are employed herein as the transition metal component of the catalyst, the transition metal component of the catalyst may also contain zirconium and/or hafnium tetrakis(dialkylamides or diarylamides). When these zirconium and/or hafnium components are employed, they are employed in quantities which provide an atomic ratio of (Zr + Hf):(Ti + Zr + Hf) of suitably from >0:1 to 0.9:1, more suitably from >0:1 to 0.8:1, more suitably from >0:1 to 0.7:1.

The hafnium and zirconium compounds are not employed alone because the efficiency of the resultant catalyst is too low to be practically feasible. When the catalyst contains either hafnium or zirconium tetrakis-(dialkylamides or diarylamides) in addition to the titanium tetrakis(dialkylamides or diarylamides), the melt index, molecular weight distribution, and density of the resultant polymer is altered. Also, the hydrogen reactivity of the catalyst is altered. These altered polymer properties are considered to be altered when compared to the properties obtained when the tetrakis(dialkyl- or diarylamides) are employed alone i.e. without any zirconium or hafnium compounds being present.

Suitable zirconium and hafnium tetrakis(dialkylamides or diarylamides) which can be employed herein, include, for example, those represented by the following formula $Tm(NR_2)_4$ wherein Tm is zirconium or hafnium and each R is independently an alkyl group having from 1 to 4 carbon atoms, a phenyl group, an alkyl benzyl group wherein each alkyl group has from 1 to 4 carbon atoms, most suitably from 1 to 3 carbon atoms, or an alkyl substituted aryl group having from 7 to 20 carbon atoms, most suitably from 7 to 11 carbon atoms, wherein the alkyl groups have from 1 to 14 carbon atoms, most suitably from 1 to 5 carbon atoms. Particularly suitable Tm tetrakis(dialkylamides or diarylamides), include, for example, zirconium tetrakis(dimethylamide), zirconium tetrakis(diethylamide), zirconium tetrakis(diphenylamide), zirconium tetrakis(di-n-propylamide), zirconium tetrakis(di-i-propylamide), zirconium tetrakis(di-i-butylamide), zirconium tetrakis(di-n-butylamide), zirconium bis(diethylamide)-bis(dimethylamide), di-i-propylamide zirconium tris-(dimethylamide),hafnium tetrakis(dimethylamide), hafnium tetrakis(diethylamide), hafnium tetrakis-(diphenylamide), hafnium tetrakis(di-n-propylamide), hafnium tetrakis(di-i-propylamide), hafnium tetrakis(di-i-butylamide),hafnium tetrakis(di-n-butylamide), hafnium tetrakis(dibenzylamide), hafnium bis(diethylamide)-bis(dimethylamide), di-i-propylamide hafnium tris(dimethylamide), and any other combinations of alkyl-or arylamide groups limited only by the steric demands of the attached groups.

Suitable support materials which can be employed herein include, for example, the anhydrous salts of magnesium dichloride, magnesium dibromide, manganese dichloride, manganese dibromide, alumina, aluminum phosphates, silica, titanium dioxide, and combinations thereof.

The metal-containing reducing agents employed herein are those represented by the formula $Al(R')_{3-m}X_m$ or $B(R')_{3-m}X_m$ wherein each R' is independently hydrogen or a hydrocarbyl group having from 1 to 20, most suitably from 2 to 5 carbon atoms; X is a halogen, preferably chlorine; and m has a value from 1 to 2. The term hydrocarbyl as employed herein includes, alkyl, cycloalkyl, aryl, aralkyl, alkaryl, and alkenyl. Particularly suitable reducing halides which can be employed herein as the reducing agent include, for example, ethylaluminum dichloride, diethylaluminum chloride, ethylaluminum sesquichloride, ethylboron dichloride, diethylboron chloride, diethylaluminum bromide, ethylaluminum dibromide, with ethylaluminum dichloride being most preferred.

Suitable cocatalyst or activators which can be employed herein include, for example, those aluminum, boron, zinc or magnesium compounds represented by the formulas $Al(R')_{3-a} X_a$, $B(R')_{3-a}X_a$, $Mg(R')_2$, $Zn-(R')_2$ or combinations thereof wherein each R' is independently hydrogen or a hydrocarbyl group having from 1 to 20 carbon atoms, most suitably from 2 to 5 carbon atoms; X is a halogen, preferably chlorine; and a has a value from zero to 1. The term hydrocarbyl as employed herein includes, alkyl, cycloalkyl, aryl, aralkyl, alkaryl, and alkenyl. Particularly suitable cocatalysts or activators which can be employed include, for example, dibutylmagnesium, trimethylboron, triethylboron, diethyl zinc, diethylaluminum chloride, trimethylaluminum, tri-i-propylaluminum, tri-i-butylaluminum, most preferred is triethylaluminum, and combinations thereof.

When it is desired that the transition metal component of the catalyst contain either or both of the aforementioned zirconium or hafnium compounds, they can be cosupported on the same support as the titanium compound or they can be independently supported on separate supports and the independently supported and prepared catalysts subsequently blended to provide the desired atomic ratio of zirconium and/or hafnium to total transition metal eg. Ti + Zr + Hf. The cosupported transition metal compounds or the mixture of independently supported transition metal compounds can then be reduced with the reducing agent. Cosupported mixtures of transition metal compounds can be prepared by adding mixtures of two or more transition metal compounds to a mixture of support material and reducing agent.

The supported transition metal catalyst can be admixed with the reducing agent in either of the following orders of addition; (a) reducing agent followed by the inorganic support followed by the transition metal compound(s) or complex(es) or (b) inorganic support followed by the reducing agent followed by the transition metal compound(s) or complex(es). The mixture is allowed to age from 5 minutes to several weeks before admixing with the activator or cocatalyst and employing the mixture in a polymerization process.

The cocatalyst or activator can be admixed with the supported, reduced transition metal catalyst component within about 5 minutes of its preparation and the mixture employed immediately in the polymerization process or alternately, the cocatalyst or activator can be added within about 5 minutes after the catalyst preparation and the resultant mixture aged for up to several days before employing the mixture in the polymerization process depending on the reactivity of the activator or cocatalyst employed. Also, if desired, the supported reduced transition metal component and the cocatalyst or activator can be added to the polymerization reactor separately or in a continuous operation, the supported reduced transition metal component can be piped to the polymerization reactor or zone and the cocatalyst or activator can be injected into the pipe carrying the supported reduced transition metal component at some point prior to the entry of the supported reduced transition metal component into the polymerization reactor or zone so that the two components are mixed prior to entering the polymerization reactor or polymerization zone. Also, if desired, the cocatalyst or activator and the supported, reduced transition metal component can be added separately to the reactor wherein they are ultimately mixed in the reactor.

Olefins which are suitably homopolymerized or copolymerized in the practice of this invention are generally the aliphatic $\alpha$-monoolefins or $\alpha$-diolefins having from 2 to 18 carbon atoms. Illustratively, such $\alpha$-olefins can include ethylene, propylene, butene-1, pentene-1, 3-methylbutene-1, 4-methylpentene-1, hexene-1, octene-1, dodecene-1, octadecene-1, 1,7-octadiene, 1,4-hexadiene, and mixtures thereof. It is understood that $\alpha$-olefins may be copolymerized with other $\alpha$-olefins and/or with other ethylenically unsaturated monomers such as styrene, 4-methylstyrene and similar ethylenically unsaturated monomers which do not destroy conventional Ziegler catalysts. Usually, ethylene or a mixture of ethylene and at least one $\alpha$-olefin having 3 to 10 carbon atoms is polymerized. Most benefits are realized in the polymerization of aliphatic $\alpha$-monoolefins, particularly ethylene with up to 50, especially from 0.1 to 40, weight percent of propylene, butene-1, hexene-1, octene-1, 4-methylpentene-1, 1,7-octadiene, 1,4-hexadiene, pentene-1, 3-methylbutene-1, or similar alpha-olefin or diolefin based on total monomer.

The catalysts of the present invention are prepared in the presence of an inert diluent. The concentration of the catalyst components are usually such that when the essential components of the catalyst composition are combined, the resultant catalyst slurry is from 0.05 to 0.5, most suitably from 0.1 to 0.2 molar with respect to metal contained in the inorganic support. Suitable inert diluents which can be employed include, for example, liquified ethane, propane, isobutane, n-butane, n-hexane, the various isomeric hexanes, isooctane, paraffinic mixtures of alkanes having from 8 to 12 carbon atoms, cyclohexane, methylcyclohexane, dimethylcyclohexane, dodecane, industrial solvents composed of saturated or aromatic hydrocarbons such as kerosene, and naphthas, especially when free of any olefin compounds and other impurities especially those which contain oxygen, sulfur or any other materials considered to be poisons of Ziegler catalysts. Also included as suitable diluents are benzene, toluene, ethylbenzene, cumene, and decalin.

Mixing of the catalyst components to provide the desired catalytic reaction product is advantageously carried out under an inert atmosphere such as nitrogen, argon or other inert gas at temperatures in the range of from -100°C to 200°C, suitably from 0°C to 100°C. The period of mixing is not considered to be critical as it is found that a sufficient catalyst composition most often occurs within 1 minute or less of mixing. However, it is preferred to permit the mixture to age after mixing for a period of at least 1 minute up to an indefinite period of time, more preferably from 12 hours to 1 week, most preferably from 18 hours to 3

4

days. In the preparation of the catalytic reaction product, it is not necessary to separate hydrocarbon soluble components from hydrocarbon insoluble components of the reaction product.

In the polymerization process employing the aforementioned catalyst compositions polymerization is effected by adding a catalytic amount of the catalyst composition to a polymerization zone containing α-olefin monomer, or vice versa. The polymerization zone is usually maintained at temperatures in the range of from 0°C to 300°C, preferably at solution polymerization temperatures. Under solution polymerization conditions temperatures of from 130°C to 250°C are preferred. Residence times of from a few seconds to several days, preferably 15 seconds to 2 hours can be suitably employed. It is generally desirable to carry out the polymerization in the absence of moisture and oxygen and a catalytic reaction product is generally within the range from 0.0001 to 0.1 millimoles in transition metal per liter of diluent. It is understood, however, that the most advantageous catalyst concentration will depend upon polymerization conditions such as temperature, pressure, solvent and presence of catalyst poisons and that the foregoing range is given to obtain maximum catalyst yields in weight of polymer per unit weight of transition metal. Generally, in the polymerization process, a carrier is employed which can be an inert organic diluent or solvent or which can be excess monomer. In order to realize the full benefit of the high efficiency catalyst of the present invention, care must be taken to avoid oversaturation of the solvent with polymer. If such saturation occurs before the catalyst becomes depleted, full efficiency is not realized. For best results, it is preferred that the amount of polymer in the carrier not exceed 50 weight percent based on the total weight of the reaction mixture.

It is understood that inert diluents employed in the polymerization recipe are suitable as defined hereinbefore.

The polymerization pressures preferably employed are relatively low, e.g., from 5 to 10,000 psig (0.034 - 68.9 MPa), preferably from 50 to 1000, (0.345 - 6.89 MPa), most preferably from 100 to 700 psig (0.689 - 4.8 MPa). However, polymerization within the scope of the present invention can occur at pressures from atmospheric up to pressures determined by the capabilities of the polymerization equipment, which include pressures up to 50,000 psig (344.5 MPa). During polymerization it is desirable to stir the polymerization recipe to obtain better temperature control and to maintain uniform polymerization mixtures throughout the polymerization zone.

In order to optimize catalyst yields in the polymerization of ethylene in an inert solvent under solution conditions, it is preferable to maintain an ethylene concentration in the solvent in the range of from 1 to 30 weight percent, most advantageously from 4 to 20 weight percent. To achieve this, when an excess of ethylene is fed into the system, a portion of the ethylene can be vented. In other processes, it is preferred to conduct the polymerization in an excess of the alpha-olefin being polymerized in order to optimize catalyst yields.

Hydrogen can be employed in the practice of this invention to control the molecular weight of the resultant polymer. For the purpose of this invention, it is beneficial to employ hydrogen in concentrations ranging from 0.001 to 1 mole per mole of monomer. The larger amounts of hydrogen within this range are found to produce generally lower molecular weight polymers. It is understood that hydrogen can be added with a monomer stream to the polymerization vessel before, during or after addition of the monomer to the polymerization vessel, but during or before addition of the catalyst.

The monomer or mixtures of monomers is contacted with the catalytic reaction product in any conventional manner, preferably by bringing the catalytic reaction product and monomer together with intimate agitation provided by suitable stirring or other means. Agitation can be continued during polymerization, or in some instances, the mixture can be allowed to remain unstirred while the polymerization takes place. In the case of more rapid reactions with more active catalysts, means can be provided for refluxing monomer and solvent, if any of the latter is present, in order to remove the heat of reaction. In any event, adequate means should be provided for dissipating the exothermic heat of polymerization. If desired, the monomer can be brought in the vapor phase into contact with the catalytic reaction product, in the presence or absence of liquid material suitably from 0°C to 300°C, most suitably from 130°C to 250°C. The polymerization can be effected in the batch manner, or in a continuous manner, such as, for example, by passing the reaction mixture through an elongated reaction tube which is contacted externally with suitable "host exchange" media to maintain the desired reaction temperature, or by passing the reaction mixture through an equilibrium overflow reactor or a series off the same.

The polymer is readily recovered from the polymerization mixture by by driving off unreacted monomer and solvent if any is employed. No further removal of impurities is required. Thus, a significant advantage of the present invention is the elimination of the catalyst removal steps. In some instances, however, it may be desirable to add a small amount of a catalyst deactivating reagent of the type conventionally employed for deactivating Ziegler catalysts.

The catalyst compositions containing the zirconium and/or hafnium tetrakis(dialkyl- or diarylamides) do not polymerize the α-olefins or α-diolefins with sufficient activity to be employed as the only transition metal source in the catalyst compositions, therefore, they are employed in combination with the titanium tetrakis-(dialkylamides or diarylamides) so as to alter parameters, for example, such as melt index ratio of the resin, the density of the resin or the hydrogen reactivity of the catalyst. When the supported titanium tetrakis-(dialkylamides or diarylamides) are employed alone as the catalyst, the resultant polymers have moderate melt index ratios of $I_{10}/I_2$ and hydrogen response characteristic of titanium based transition metal catalysts typically employed in the conditions described herein of this invention. When it is desired that the polymer have a higher melt index ratio or different response to hydrogen concentrations in the polymerization reactor, then amounts of the zirconium and/or hafnium tetrakis(dialkyl- or diarylamides) are employed so as to provide the resultant polymers with higher melt index ratios or different melt index values.

The following Examples are given to illustrate the invention. All percentages are by weight and all parts are by molar or atomic ratio unless otherwise indicated.

In the following examples and comparative experiments, the melt index values $I_2$ and $I_{10}$ are determined by ASTM D 1238-86, condition "E" for $I_2$ and condition "N" for $I_{10}$, and the density values are determined by ASTM D 1248-84.

## PREPARATION OF ANHYDROUS MAGNESIUM DICHLORIDE

To 21.16 ml of 0.709 molar dibutyl magnesium is added 78.84 ml of ISOPAR™ E. Anhydrous electronic grade HCl is passed through the solution until all of the magnesium alkyl is converted to magnesium chloride. Excess HCl is stripped from the slurry by purging with dry $N_2$. The resulting slurry (0.15 molar) of $MgCl_2$ in Isopar E is stored under a nitrogen atmosphere and utilized as a stock solution in the preparation of catalyst compositions. Prior to use, the portions of the stock solution is mixed with additional ISOPAR™ E so as to obtain the desired molarity.

## PREPARATION OF TRANSITION METAL COMPLEXES

The following practices and procedures are common to all preparative Examples:

All complexes are prepared under dry nitrogen which is passed through a column of reduced chromium on silica to remove the last traces of water and oxygen. Toluene is distilled from either Na or Na/K alloy under nitrogen. Hexane, diethyl ether and tetrahydrofuran are distilled from the Na/K benzophenone radical anion under nitrogen. All solvents are degassed prior to use. Manipulations are performed using standard Schlenk and vacuum line techniques. Amines and lithium alkyl reagents are purchased from Aldrich Chemical Co. and used without further purification or trap-to-trap distilled prior to use. Dimethylamine (anhydrous) is purchased from Matheson and used without further purification. Complexes are stored below -20°C for liquids and room temperature for solids. Polymerization compositions are prepared in a Vacuum Atmospheres dry box equipped with a recirculating catalyst train packed with 13X molecular sieves and a deoxygenation catalyst such as those available from Vacuum Atmospheres.

## EXAMPLE 1

### A. Preparation of titanium tetrakis(dimethylamide).

#### Step (1) Preparation of lithium dimethylamide.

Dimethylamine is condensed into a 250 ml Schlenk flask at -20°C over 4A Linde molecular sieves. The liquid is maintained at or below -10°C to avoid vapor phase transition. A 1000 ml Schlenk is charged with 350 ml of diethyl ether and fitted with a pressure equalizing dropping funnel and magnetic stir bar. The contents are cooled in a dry ice/acetone bath and maintained at or below -20°C for all additions. To the chilled diethyl ether in the 1000 ml flask is added n- butyllithium, 0.500 mole of a 2.90 molar solution in hexane. Diethyl ether, 150 ml, is added to the dropping funnel which is jacketed with dry ice to maintain a liquid temperature below -20°C followed by excess dimethylamine, 35 ml (0.528 mole). The dimethylamine is slowly dripped into the 1000 ml Schlenk over the course of 1 hour. A suspension of white pyrophoric powder is obtained which is determined to be lithium dimethylamide. The mixture is warmed to room temperature for 1 hour to devolatilize excess dimethylamine.

Step (2) Preparation of titanium tetrakis(dimethylamide).

The same apparatus described in Step (1) is used in this procedure. The 250 ml pressure equalizing dropping funnel is charged with 100 ml of toluene and titanium tetrachloride, 12.4 ml (0.112 mole). The solution is added dropwise to the magnetically stirred suspension of lithium dimethylamide over the course of 0.5 hour at -20°C. A brown solution over insoluble lithium salts is obtained which is refluxed 2 hours. All volatiles are removed under vacuum at room temperature and the mixture is extracted twice with 200 ml portions of hexane. Solvent is distilled from the combined extracts giving a dark orange oil. Distillation of the oil (boiling point = 60°C - 63°C @ 0.025 mm Hg; 3.3 Pa) gives the orange liquid titanium tetrakis-(dimethylamide) in 90% yield.

B. Preparation of zirconium tetrakis(dimethylamide).

Step (1) Preparation of lithium dimethylamide.

The same method described in Example 1A is used to prepare lithium dimethylamide.

Step (2) Preparation of zirconium tetrakis(dimethylamide).

The lithium dimethylamide, 0.5 mole, in 250 ml of diethyl ether is chilled in an acetone/dry ice bath to -78°C. Zirconium tetrachloride, 26 g (0.112 mole), is transferred to a solid addition funnel attached to the 1000 ml Schlenk then added over 30 minutes to the magnetically stirred lithium dimethylamide slurry. The mixture is warmed slowly to room temperature then refluxed 1 hour. All volatiles are removed under vacuum at room temperature and the remaining oily solid is extracted twice with 150 ml portions of hexane. The combined extracts are reduced in solvent volume then transferred to a 50 ml flask. Solid zirconium tetrakis-(dimethylamide) is distilled from the residue under reduced pressure (boiling point = 40°C to 60°C @ 0.025 mm Hg; 3.3 Pa) to give a white crystalline, low melting solid.

C. Preparation of hafnium tetrakis(dimethylamide).

Step (1) Preparation of lithium dimethylamide.

The same method described in Example 1A is used to prepare lithium dimethylamide.

Step (2) Preparation of hafnium tetrakis(dimethylamide).

The lithium dimethylamide, 0.5 mole, in 250 ml of diethyl ether is chilled in an acetone/dry ice bath to -78°C. Hafnium tetrachloride, 35.9 g (0.112 mole), is transferred to a solid addition funnel attached to the 500 ml Schlenk then added over 30 minutes to the magnetically stirred lithium dimethylamide slurry. The mixture is warmed slowly to room temperature then refluxed 1 hour. All volatiles are removed under vacuum at room temperature and the remaining oily solid is extracted twice with 150 ml portions of hexane. The combined extracts are reduced in solvent volume then transferred to a 50 ml flask. Solid hafnium tetrakis-(dimethylamide) is distilled from the residue under reduced pressure (boiling point = 55°C - 65°C @ 0.025 mm Hg; 3.3 Pa) to give a very low melting, waxy, white solid.

D. Preparation of titanium tetrakis(diethylamide).

Step (1) Preparation of lithium diethylamide.

To a 500 ml Schlenk is added 250 ml of diethylether which is chilled in an acetone/dry ice bath to -78°C. Next is added n-butyllithium, 0.300 mole of a 2.90 M solution in hexane, and the contents are allowed to warm to -20°C. Diethylamine, freshly distilled from calcium hydride, 35 ml (0.34 mole), is added via a 250 ml pressure equalizing dropping funnel over the course of 30 minutes while stirring the mixture at -20°C. The contents are warmed to room temperature for 1 hour.

Step (2) Preparation titanium tetrakis(diethylamide).

The same apparatus described in Step (1) of Example 1-D is used in this procedure. The 250 ml dropping funnel is charged with 50 ml of toluene and titanium tetrachloride, 7.7 ml (75 millimole), and added to the solution of lithium diethylamide which is chilled to -78°C over the course of 30 minutes. The mixture is warmed to room temperature then refluxed 2 hours. All volatiles are removed under vacuum and the residue is extracted twice with 100 ml portions of hexane. The combined extracts are reduced in solvent volume then transferred to a small scale distillation apparatus. The complex titanium tetrakis(diethylamide) is distilled from the mixture at 103°C - 105°C (0.025 mm Hg; 3.3 Pa) to give approximately 8 g as an orange liquid.

E. Preparation of titanium tetrakis(diphenylamide).

Step (1) Preparation of lithium diphenylamide.

To a 500 ml Schlenk equipped with a 250 ml pressure equalizing dropping funnel is added 250 ml of diethyl ether which is chilled to -78°C in an acetone/dry ice bath. To this is added n-butyl lithium, 0.10 mole of a 2.90 molar solution in hexane, followed by the addition of 16.923 g (0.10 mole) of diphenylamine dissolved in ether, 50 ml. The flask contents are stirred magnetically and maintained at -78°C during the addition of diphenylamine which requires 0.5 hour. The contents are warmed to room temperature for 2 hours.

Step (2) Preparation of titanium tetrakis(diphenylamide).

The same apparatus described in Step (1) of Example 1-E is used in this procedure. The 250 ml dropping funnel is charged with toluene, 50 ml, and titanium tetrachloride, 2.4 ml (0.022 mole). This is added dropwise to the flask containing lithium diphenylamide which is maintained at -20°C during the addition while stirring magnetically. Total addition time is 30 minutes. The mixture is warmed to room temperature and than reffluxed for 2 hours. All volatiles are removed under vacuum to give a deep red oily residue. Unreacted diphenylamine is sublimed from the oil under reduced pressure at 120°C to give a red solid. Extraction of the solid with hexane, 50 ml, followed by solvent volume reduction under vacuum then cooling to -30°C yields rod crystals of titanium tetrakis(diphenylamide).

F. Preparation of titanium tetrakis(dipropylamide).

Step (1)Preparation of lithium dipropylamide.

A one liter Schlenk flask equipped with a 250 ml pressure equalizing dropping funnel and magnetic stir bar is charged with 500 ml of diethylether. The contents are chilled to -78°C in an acetone/dry ice bath and n-butyllithium, 0.250 mole or a 2.81 molar solution in hexane is next added. A solution containing dipropylamine, 38 ml, dissolved in 150 ml of ether is added dropwise to the n-butyllithium solution while the contents are stirred magnetically and allowed to slowly warm to room temperature. The contents are stirred overnight at room temperature to insure complete reaction.

Step (2) Preparation of titanium tetrakis(dipropylamide).

The same apparatus described in Step (1) of Example 1-F is used in this procedure. The 250 ml dropping funnel is charged with toluene, 100 ml, and titanium tetrachloride, 10.7 g (0.0562 mole). This is added dropwise to the flask containing lithium dipropylamide while stirring magnetically. Total addition times are typically 30 minutes. The mixture is then refluxed for 1.5 hours. All volatiles are removed by distillation and under vacuum to give a deeply colored brown, oily residue. The residue is extracted with hexane, 2 x 150 ml, and the extracts are combined and solvent removed under vacuum. The remaining oil is transferred to a small scale distillation apparatus. Vacuum distillation at 157°C and 0.05 mm Hg (6.7 Pa) gave the product as an orange-brown liquid, titanium tetrakis(dipropylamide).

G. Preparation of bis(diethylamide)titanium bis(dimethylamide).

Step (1) Preparation of dichlorotitanium bis(dimethylamide).

The complex is prepared by the disproportionation reaction of titanium tetrakis(dimethylamide) with titanium tetrachloride in toluene. In a 250 ml Schlenk containing 75 ml of toluene is added, 0.43 ml (3.88 millimole) of titanium tetrachloride and 0.95 g (3.88 mmole of titanium tetrakis(dimethylamide). The mixture is refluxed one hour to give a brown solution. All volatiles are removed under vacuum and the deep brown powder is washed twice with 25 ml portions of hexane followed by vacuum drying of the powder. The complex is transferred to a 500 ml Schlenk for the reaction described in Step (3) of Example 1-F.

Step (2) Preparation of lithium diethylamide.

The complex is prepared as previously described in Step (1) of Example 1-D on a 12.25 mmole scale for subsequent reaction with dichlorotitanium bis(dimethylamide).

Step (3) Preparation of bis(diethylamide) titanium bis(dimethylamide).

Dichlorotitanium bis(dimethylamide) is dissolved in 100 ml of diethyl ether then cooled in an acetone/dry ice bath to -20°C. Lithium diethylamide, 12.25 mmole, is added dropwise via a pressure equalizing dropping funnel to the magnetically stirred mixture over 30 minutes. The mixture is slowly warmed to room temperature then refluxed 2 hours. All volatiles are removed under vacuum to give an orange-brown oil over lithium salts. The oil is extracted with hexane (3 X 20 ml) and the combined extracts are transferred for distillation apparatus and the solvent is removed under vacuum. Distillation of the residue at 82°C to 86°C (0.025 mm Hg; 3.3 Pa) gives the orange liquid bis(diethylamide)titanium bis-(dimethylamide).

EXAMPLE 2 CATALYST PREPARATION AND ACTIVATION

A. Preparation of Catalyst Premix Compositions.

The catalyst is prepared by adding with stirring to a septum capped bottle of sufficient volume to contain the mixture of the following components in the order listed. In this and all subsequent Examples unless otherwise indicated, the cocatalyst or activator is not added until just prior to addition to the polymerization reactor. The catalyst premix is defined as the composition containing components $A + B + C + D$ or $B + A + C + D$. This is indefinitely stable prior to activation with Mc or cocatalyst.

  1. Titanium Tetrakis(dimethylamide) premix
    A) 279.2 ml $MsCl_2$, 0.1816 $\underline{M}$ in Ms (support, Ms = Mg)
    B) 11 ml ISOPAR™ E (diluent)
    C) 7.72 g 25 wt.% ethylaluminum dichloride (reducing agent, Mr = Al)
    D) 0.853 g $Ti(N(CH_3)_2)_4$ (where Tm = Ti)
     Components $A + B + C$ are aged at least 24 hours. Components $A + B + C + D$ are aged at least 48 hours prior to adding Mc. Calculated Mg/Tm/Al ratio (where Tm = Ti) = 40/3/12.
  2. Titanium Tetrakis(dimethylamide) premix
    A) 139.6 ml $MsCl_2$, 0.1816 $\underline{M}$ in Ms (support, Ms = Mg)
    B) 2.8 ml ISOPAR™ E (diluent)
    C) 5.793 g 25 wt.% ethylaluminum dichloride (reducing agent, Mr = Al)
    D) 0.426 g $Ti(N(CH_3)_2)_4$ (where Tm = Ti)
    Components $A + B + C$ are aged at least 24 hours. Components $A + B + C + D$ are aged at least 48 hours prior to adding Mc. Calculated Mg/Tm/Al ratio (where Tm = Ti) = 40/3/18.
  3. Titanium Tetrakis(diethylamide) premix
    A) 139.6 ml $MsCl_2$, 0.1816 $\underline{M}$ in Ms (support, Ms = Mg)
    B) 0 ml ISOPAR™ E (diluent)
    C) 7.724 g 25 wt.% ethylaluminum dichloride (reducing agent, Mr = Al)
    D) 0.640 g $Ti(N(C_2H_5)_2)_4$ (where Tm = Ti)
    Components $A + B + C$ are aged at least 24 hours. Components $A + B + C + D$ are aged at least 48 hours prior to adding Mc. Calculated Mg/Tm/Al ratio (where Tm = Ti) = 40/3/24.
  4. Titanium Tetrakis(dipropylamide) premix

EP 0 320 169 B1

A) 186.1 ml MsCl$_2$, 0.1816 $\underline{M}$ in Ms (support, Ms = Mg)
B) 0 ml ISOPAR™ E
C) 10.298 g 25 wt.% ethylaluminum dichloride (reducing agent, Mr = Al)
D) 1.016 g Ti(N(C$_3$H$_7$)$_2$)$_4$

Components A + B + C are aged at least 24 hours. Components A + B + C + D are aged at least 48 hours prior to adding Mc. Calculated Mg/Tm/Al ratio (where Tm = Ti) = 40/3/24.

5. Titanium Tetrakis(diphenylamide) premix
A) 45.6 ml MsCl$_2$, 0.1816 $\underline{M}$ in Ms (support, Ms = Mg)
B) 0 ml ISOPAR™ E
C) 3.627 g 26.6 wt.% ethylaluminum dichloride (reducing agent)
D) 0.457 g Ti(N(C$_6$H$_5$)$_2$)$_4$

Components A + B + C are aged at least 24 hours. Components A + B + C + D are aged at least 48 hours prior to adding Mc. Calculated Mg/Tm/Al ratio (where Tm = Ti) = 40/3/36.

6. Titanium Tetrakis(dimethylamide) premix
A) 48.8 ml MsCl$_2$/ethylaluminum dichloride stock solution*(Ms = Mg)
B) 1.2 ml ISOPAR™ E
D) 0.142 g Ti(N(CH$_3$)$_2$)$_4$

Components A + B + D are aged at least 48 hours prior to adding Mc. Calculated Mg/Tm/Al ratio (where Tm = Ti) = 40/3/18,

7. Zirconium Tetrakis(dimethylamide) premix
A) 48.8 ml MsCl$_2$/ethylaluminum dichloride stock solution*(Ms = Mg)
B) 1.2 ml ISOPAR™ E
D) 0.170 g Zr(N(CH$_3$)$_2$)$_4$

Components A + B + D are aged at least 48 hours prior to adding Mc. Calculated Mg/Tm/Al ratio (where Tm = Ti) = 40/3/18.

8. Hafnium Tetrakis(dimethylamide) premix
A) 48.8 ml MsCl$_2$/ethylaluminum dichloride stock solution*(Ms = Mg)
B) 1.2 ml ISOPAR™ E
D) 0.225 g Hf(N(CH$_3$)$_2$)$_4$

Components A + B + D are aged at least 48 hours prior to adding Mc. Calculated Mg/Tm/Al ratio (where Tm = Ti) = 40/3/18.

9. Bis(diethylamide) Titanium
Bis(dimethylamide) premix
A) 1.1 ml ISOPAR™ E
B) 46.5 ml MsCl$_2$ 0.1816 $\underline{M}$ in Ms (Ms = Mg)
C) 1.815 g 26.6 wt.% ethylaluminum dichloride (reducing agent)
D) 0.178 g Ti(N(CH$_3$)$_2$)$_2$(N(C$_2$H$_5$)$_2$)$_2$

Components A + B + C are aged at least 24 hours prior to adding D. Components A + B + C + D are aged at least 24 hours prior to activation with Mc. Calculated Mg/Tm/Al ratio (where Tm = Ti) = 40/3/18.

B. Preparation and Activation of Catalyst Compositions

The catalyst is activated by adding under nitrogen to a 4-ounce serum bottle the following components in any order with the exception of Mc which is added last. The cocatalyst or activator is added just prior to addition to the polymerization reactor.

1. Single Transition Metal Component Catalysts
A) 44.9 ml ISOPAR™ E (diluent)
B) 3.6 ml premix catalyst (Examples A1-A8)
C) 1.5 ml 0.12 $\underline{M}$ triethylaluminum (Mc = Al)

The final ratio for Tm/Mc = 3/12 (where Tm = Ti, Zr, Hf and Mc = Al of triethylaluminum).

2. Mixed Transition Metal Component Catalysts

*Stock solution = 186.1 ml of 0.182 $\underline{M}$ MgCl$_2$ + 7.259 g of 26.6% ethylaluminum dichloride, components are aged at least 24 hours.

*Stock solution = 186.1 ml or 0.182 $\underline{M}$ M$_2$Cl$_2$ + 7.259 g of 26.6% ethylaluminum dichloride, components are aged at least 24 hours.

10

A) 45.2 ISOPAR™ E

B) (3.6)x ml titanium tetrakis(dimethylamide) (Example 2A6)

C) (3.6)y ml zirconium tetrakis(dimethylamide) (Example 2A7)

D) (3.6)z ml hafnium tetrakis(dimethylamide) (Example 2A8)

E) 1.2 ml 0.12 $\underline{M}$ triethylaluminum (Mc = Al)

The final ratio for Tm/Mc = 3/9.6 (where Tm = the sum of Ti/Zr/Hf for a composition containing a Mg/Tm ratio of 40/3 and Mc = Al of triethylaluminum). X, y and z are the normalized Tm ratios where x + y + z = 1. All activated catalyst compositions are prepared to give a final Tm concentration of approximately 0.9 µmole/ml.

EXAMPLE 3 POLYMERIZATION.

The method described for the polymerization reaction is used in all examples described in Table I. A stirred, one gallon (3.79 liter) batch reactor containing two liters of Isopar E and optionally a comonomer is heated to the desired polymerization temperature and the solvent vapor pressure recorded. To this an amount of hydrogen is optionally added which is recorded as the differential pressure drop from a 75 ml pressurized tank. The reactor is pressurized with ethylene to give the final desired reactor pressure which is approximately 450 psi (3.10 MPa). An amount or catalyst adjusted to produce a maximum ethylene consumption of approximately 120 g as measured by a mass flow meter over a 10 minute (600 g) reaction time is injected into the reactor. Ethylene reactor pressure is maintained at a constant level by a demand feed regulator to replace the ethylene consumed by the polymerization reaction. The total reaction time is 10 minute, (600 s). The results are given in Table I.

EP 0 320 169 B1

### TABLE I

| RUN NO. | TRANSI-TION METAL SOURCE | R GROUP IN $Tm(\bar{R}R_2)_4$ | CATALYST PREPARA-TION AND ACTIVATION | COMONOMER type | COMONOMER Volume, ml | REACTOR TEMP. °C | HYDROGEN DELTA psi |
|---|---|---|---|---|---|---|---|
| A | Ex. 1-A | methyl | Ex. 2-A1-B1 | Hexene | 345 | 185 | 100 |
| B | Ex. 1-A | methyl | Ex. 2-A1-B1 | Decene | 345 | 185 | 100 |
| C | Ex. 1-A | methyl | Ex. 2-A1-B1 | 4-Methyl-pentene | 345 | 185 | 100 |
| D | Ex. 1-A | methyl | Ex. 2-A1-B1 | Octene | 345 | 185 | 100 |
| E | Ex. 1-A | methyl | Ex. 2-A2-B1 | Octene | 345 | 185 | 100 |
| F | Ex. 1-A | methyl | Ex. 2-A2-B1 | Octene | 535 | 185 | 50 |
| G | Ex. 1-A | methyl | Ex. 2-A2-B1 | Octene | 345 | 175 | 150 |
| H | Ex. 1-D | ethyl | Ex. 2-A3-B1 | Octene | 345 | 185 | 100 |
| I | Ex. 1-F | propyl | Ex. 2-A4-B1 | Octene | 345 | 185 | 100 |
| J | Ex. 1-E | phenyl | Ex. 2-A5-B1 | Octene | 345 | 185 | 100 |
| K | Ex. 1-E | phenyl | Ex. 2-A5-B1 | Octene | 345 | 185 | 0 |

\* = not an example of the current invention
N.D. = not determined due to insufficient sample size

TABLE I (Continued)

| RUN NO. | TRANSITION METAL SOURCE | R GROUP IN $Tm(NR_2)_4$ | CATALYST PREPARATION AND ACTIVATION | COMONOMER type | COMONOMER Volume, ml | REACTOR TEMP. °C | HYDROGEN DELTA psi |
|---|---|---|---|---|---|---|---|
| L* | Ex. 1-B | methyl | Ex. 2-A7-B2 | Octene | 345 | 185 | 100 |
| M | Ex. 1-A,B | methyl | Ex. 2-A6, 7-B2 | Octene | 345 | 185 | 100 |
| N | Ex. 1-A,B | methyl | Ex. 2-A6, 7-B2 | Octene | 345 | 185 | 100 |
| O* | Ex. 1-C | methyl | Ex. 2-A8-B2 | Octene | 345 | 185 | 100 |
| P | Ex. 1-A,C | methyl | Ex. 2-A6, 8-B2 | Octene | 345 | 185 | 100 |
| Q | Ex. 1-A,C | methyl | Ex. 2-A6, 8-B2 | Octene | 345 | 185 | 100 |
| R | Ex. 1-A,B,C | methyl | Ex. 2-A6,7,8-B2 | Octene | 345 | 185 | 100 |
| S | Ex. 1-A | methyl | Ex. 2-A6-B2 | Octene | 345 | 225 | 100 |
| T | Ex. 1-A | methyl | Ex. 2-A6-B2 | Octene | 345 | 150 | 100 |
| U | Ex. 1-A | methyl | Ex. 2-A6-B2 | Octene | 0 | 185 | 100 |
| V | Ex. 1-G | methyl/-ethyl | Ex. 2-A9-B1 | Octene | 790 | 185 | 100 |

* = not an example of the current invention
N.D. = not determined due to insufficient sample size

EP 0 320 169 B1

TABLE I (Continued)

| RUN NO. | EFFICIENCY IN kg-PE/g Tm | ATOMIC RATIO Ms/Tm/Mr/Mc | ATOMIC RATIO Ti/Zr/Hf | µMOLES Tm IN REACTOR | $I_2$ | $I_{10}/I_2$ | DENSITY |
|---|---|---|---|---|---|---|---|
| A | 175 | 40/3/12/12 | 3/0/0 | 12.3 | 1.56 | 7.31 | 0.9233 |
| B | 202 | 40/3/12/12 | 3/0/0 | 12.8 | 1.01 | 7.44 | 0.9293 |
| C | 161 | 40/3/12/12 | 3/0/0 | 14.6 | 1.59 | 7.54 | 0.9284 |
| D | 239 | 40/3/12/12 | 3/0/0 | 10.9 | 1.25 | 7.47 | 0.9247 |
| E | 368 | 40/3/18/12 | 3/0/0 | 14.0 | 1.52 | 7.07 | 0.9254 |
| F | 398 | 40/3/18/12 | 3/0/0 | 16.0 | 0.90 | 7.88 | 0.9186 |
| G | 840 | 40/3/18/12 | 3/0/0 | 8.0 | 1.63 | 7.07 | 0.9229 |
| H | 505 | 40/3/24/12 | 3/0/0 | 5.47 | 1.24 | 7.60 | 0.9210 |
| I | 304 | 40/3/24/12 | 3/0/0 | 8.4 | 1.38 | 7.25 | 0.9247 |
| J | 57 | 40/3/36/12 | 3/0/0 | 9.0 | 1.08 | 7.39 | 0.9282 |
| K | 47 | 40/3/36/12 | 3/0/0 | 18.0 | 0.82 | 7.84 | 0.9288 |

* = not an example of the current invention

N.D. = not determined due to insufficient sample size

14

## TABLE I (Continued)

| RUN NO. | EFFICIENCY IN kg-PE/g Tm | ATOMIC RATIO Ms/Tm/Mr/Mc | ATOMIC RATIO Ti/Zr/Hf | μMOLES Tm IN REACTOR | $I_2$ | $I_{10}/I_2$ | DENSITY |
|---|---|---|---|---|---|---|---|
| L* | 18 | 40/3/18/9.5 | 0/3/0 | 9.0 | 0.95 | 7.45 | N.D. |
| M | 306 | 40/3/18/9.5 | 2.7/.3/0 | 9.0 | 1.29 | 7.40 | 0.9251 |
| N | 47 | 40/3/18/9.5 | .3/2.7/0 | 9.0 | 1.64 | 7.68 | 0.9244 |
| O* | 5 | 40/3/18/9.5 | 0/0/3 | 9.0 | 1.04 | 7.90 | N.D. |
| P | 230 | 40/3/18/9.5 | 2.7/0/.3 | 9.0 | 1.36 | 7.59 | 0.9242 |
| Q | 28 | 40/3/18/9.5 | .3/0/2.7 | 9.0 | 1.67 | 8.28 | 0.9214 |
| R | 67 | 40/3/18/9.5 | 1/1/1 | 9.0 | 1.91 | 7.47 | 0.9220 |
| S | 50 | 40/3/18/9.5 | 3/0/0 | 9.0 | 28.52 | 7.57 | 0.9254 |
| T | 799 | 40/3/18/9.5 | 3/0/0 | 9.0 | 0.31 | 7.67 | 0.9222 |
| U | 346 | 40/3/18/9.5 | 3/0/0 | 9.0 | 0.60 | 7.15 | 0.9590 |
| V | 260 | 40/ /18/12 | 3/0/0 | 9.0 | 2.60 | 7.61 | 0.9185 |

* = not an example of the current invention
N.D. = not determined due to insufficient sample size

## EXAMPLE 4

### A. Preparation of Catalyst

The following components are blended and added in the order listed.

1. 1.1 cc of ISOPAR™ E diluent
2. 46.5 cc of 0.1816 M $MgCl_2$ support

3. 1.92 g of (25 wt.% Al solution) of ethyl aluminum dichloride (EADC) reducing agent

4. 0.142 g of $Ti(NR_2)_4$ where R = methyl

5. 1.5 cc of 0.12 M triethylaluminum (cocatalyst or activator)

The atomic ratio of Mg/Ti/Al is 40/3/18 where the amount of aluminum does not include that contributed by the cocatalyst. The mixture containing the $MgCl_2$ and EADC is aged 24 hours prior to adding the Ti-$(NR_2)_4$. The catalyst is aged 24 hours after adding the $Ti(NR_2)_4$ before mixing with the cocatalyst.

B. Polymerization

The polymerization is conducted as described in Example 3. The amount of octene employed is 300 ml, the amount of hydrogen is that which produces a $\Delta P$ of 100 psi (689.48 kPa) in a 75 ml pressure vessel. The polymerization is conducted at a temperature of 185°C.

The results of the polymerization is given in Table II.

COMPARATIVE EXPERIMENT A

A. Preparation of Catalyst

The following components are blended and added in the order listed.

1. 1.1 cc of ISOPAR™ E diluent

2. 46.5 cc of 0.1816 M $MgCl_2$ support

3. 0.142 g of $Ti(NR_2)_4$ where R = methyl

4. 1.92 g of (25 wt.% Al solution) of ethyl aluminum dichloride (EADC) reducing agent

5. 1.5 cc of 0.12 M triethylaluminum (cocatalyst or activator)

The atomic ratio of Mg/Ti/Al is 40/3/18 where the amount of aluminum does not include the cocatalyst. The mixture containing the $MgCl_2$ and $Ti(NR_2)_4$ is aged 24 hours prior to adding the EADC. The catalyst is aged 24 hours after adding the EADC before mixing with the cocatalyst.

B. Polymerization

The polymerization is conducted in the same manner as in Example 4. The results of the polymerization are given in Table II.

TABLE II

| Run No. | Catalyst Employed | Efficiency gP/gTi |
|---------|-------------------|-------------------|
| 1[a] | Ex. 4 | 227,000 |
| 2[*,a] | Comp. Expt. A | 172,000 |
| 3[b] | Ex. 4 | 260,000 |
| 4[*,b] | Comp. Expt. A | 192,000 |

[*] Not an example of the present invention.

[a] The polymerization is conducted 24 hours after mixing of the catalyst with the cocatalyst.

[b] The polymerization is conducted 48 hours after mixing of the catalyst with the cocatalyst.

Claims

1. A process for preparing a supported catalyst which comprises mixing in a suitable inert diluent or solvent the following components A, B, and C:

(A) an inorganic support;

(B) a metal-containing reducing agent of the formula $Al(R')_{3-m}X_m$ or $B(R')_{3-m}X_m$ wherein each R' is independently hydrogen or a hydrocarbyl group having 1 to 20 carbon atoms, X is halogen and m has a value from 1 to 2; and

16

(C) a transition metal compound selected from a titanium tetrakis(dialkylamide) or titanium tetrakis-(diarylamide) or a combination thereof;

characterized in that the addition of said transition metal compound (C) is delayed until all of said support (A) and reducing agent (B) have been added and wherein the components are employed in quantities which provide an atomic ratio of Ms:Tm of from 2:1 to 160:1; an atomic ratio of Mr:Tm of from 1:1 to 64:1; and wherein Ms represents the metal atoms in the support material, Mr represents the metal atoms in the reducing agent and Tm represents the sum of the transition metal atoms in the transition metal component.

2. A process of Claim 1, wherein the components are employed in quantities which provide an atomic ratio of Ms:Tm of from 8:1 to 80:1 and an atomic ratio of Mr:Tm of from 2:1 to 32:1.

3. A process of Claim 2, wherein the components are employed in quantities which provide an atomic ratio of Ms:Tm of from 11:1 to 40:1 and an atomic ratio of Mr:Tm of from 4:1 to 16:1.

4. A process of any one of the preceding claims, wherein component (A) is a magnesium dichloride or dibromide.

5. A process of Claim 4, wherein component (A) is magnesium dichloride.

6. A process of any one of the preceding claims, wherein component (C) is a compound represented by the formula $Ti(NR_2)_4$ wherein each R is independently an alkyl group having from 1 to 4 carbon atoms, a benzyl group, an alkyl substituted benzyl group wherein each alkyl group has from 1 to 4 carbon atoms, a phenyl group, or an alkyl substituted aryl group having from 7 to 20 carbon atoms, wherein the alkyl groups have from 1 to 14 carbon atoms.

7. A process of any one of the preceding claims, wherein component (B) is ethylaluminum dichloride, diethylaluminum chloride, ethylaluminum sesquichloride, diethylboron chloride, diethylaluminum bromide, ethylaluminum dibromide, or any combination thereof.

8. A process of Claim 7, wherein component (B) is ethylaluminum dichloride.

9. A process of any one of the preceding claims, wherein component (C) is titanium tetrakis-(dimethylamide), titanium tetrakis(diethylamide), titanium tetrakis(di-i-propylamide), titanium tetrakis(di-n-propylamide), titanium tetrakis(di-i-butylamide), titanium tetrakis(di-n-butylamide), titanium tetrakis-(diphenylamide), titanium tetrakis(dibenzylamide), titanium bis(diethylamide) bis(dimethylamide) or di-i-propylamide titanium tris(dimethylamide), or any combination thereof.

10. A process of any one of the preceding claims, wherein the transition metal component (C) additionally contains at least one zirconium or hafnium compound selected from a zirconium tetrakis(dialkylamide), a zirconium tetrakis(diarylamide), a hafnium tetrakis(dialkylamide), a hafnium tetrakis(diarylamide), or any combination thereof; wherein the atomic ratio of (Zr + Hf) to (Ti + Zr + Hf) is from >0:1 to 0.9:1.

11. A process of Claim 10, wherein
(a) the zirconium compound is represented by the formula $Zr(NR_2)_4$ wherein each R is independently an alkyl group having from 1 to 4 carbon atoms, a benzyl group, an alkyl substituted benzyl group wherein each alkyl group has from 1 to 4 carbon atoms, a phenyl group, or an alkyl substituted aryl group having from 7 to 20 carbon atoms, wherein the alkyl groups have from 1 to 14 carbon atoms;
(b) the hafnium compound is represented by the formula $Hf(NR_2)_4$ wherein each R is independently an alkyl group having from 1 to 4 carbon atoms, a benzyl group, an alkyl substituted benzyl group wherein each alkyl group has from 1 to 4 carbon atoms, a phenyl group, or an alkyl substituted aryl group having from 7 to 20 carbon atoms, wherein the alkyl groups have from 1 to 14 carbon atoms; and
(c) the atomic ratio of (Zr + Hf) to (Ti + Zr + Hf) is from >0:1 to 0.8:1.

12. A process of Claim 11, wherein

(a) the zirconium compound is zirconium tetrakis(dimethylamide), zirconium tetrakis(diethylamide), zirconium tetrakis(di-i-propylamide), zirconium tetrakis(di-n-propylamide), zirconium tetrakis(di-i-butylamide), zirconium tetrakis(di-n-butylamide), zirconium tetrakis(diphenylamide), zirconium bis-(diethylamide) bis(dimethylamide) or di-i-propylamide zirconium tris(dimethylamide), or any combination thereof;

(b) the hafnium compound is hafnium tetrakis(dimethylamide), hafnium tetrakis(diethylamide), hafnium tetrakis(di-i-propylamide), hafnium tetrakis(di-n-propylamide), hafnium tetrakis(di-i-butylamide), hafnium tetrakis(di-n-butylamide), hafnium tetrakis(diphenylamide), hafnium tetrakis(dibenzylamide), hafnium bis(diethylamide) bis(dimethylamide) or di-i-propylamide hafnium tris(dimethylamide), or any combination thereof; and

(c) the atomic ratio of $(Zr + Hf)$ to $(Ti + Zr + Hf)$ is from >0:1 to 0.7:1.

13. A process of any one of the preceding claims, wherein the concentration of the catalyst components are such that the resultant catalyst slurry is from 0.1 to 0.2 molar with respect to Ms.

14. A process of any one of the preceding claims, wherein the inert diluent is selected from liquified ethane, propane, isobutane, n-butane, n-hexane, isomeric hexanes, isooctane, paraffinic mixtures of $C_8$-$C_{12}$ alkanes, cyclohexane, methylcyclohexane, dimethylcyclohexane, dodecane, industrial solvents composed of saturated or aromatic hydrocarbons, benzene, toluene, ethylbenzene, cumene and decalin.

15. A process of any one of the preceding claims, wherein said mixing is carried out under an inert atmosphere.

16. A process for polymerising one or more $\alpha$-olefins or a mixture of one or more $\alpha$-olefins and one or more polymerizable ethylenically unsaturated monomers which process comprises conducting the polymerization under solution conditions in the presence of

(I) a supported catalyst prepared by a process of any one of the preceding claims; and

(II) a cocatalyst or activator compound.

17. A process of Claim 16, wherein said cocatalyst or activator comprises a compound of the formula Al-$(R')_{3-a}X_a$, $B(R')_{3-a}X_a$, $Mg(R')_2$ or $Zn(R')_2$, wherein each R' is independently hydrogen or a $C_{1-20}$ hydrocarbyl group, X is halogen, and a is 0 or 1.

18. A process of Claim 17, wherein said cocatalyst or activator comprises a compound of the formula $AlR'_3$ or $BR'_3$ wherein R' is independently a $C_1$-$C_{20}$ alkyl group.

19. A process according to Claim 17 or Claim 18, wherein said cocatalyst or activator is diethylaluminum chloride, trimethylaluminum, tri-i-propylaluminum, tri-i-butylaluminum, triethylaluminum, dibutylmagnesium, trimethylboron, triethylboron, diethylzinc or any combination thereof.

20. A process of Claim 19, wherein said cocatalyst or activator is triethylaluminum.

21. A process of any one of Claims 16 to 20, wherein ethylene or a mixture of ethylene and at least one $\alpha$-olefin having from 3 to 10 carbon atoms is polymerized.

22. A process of Claim 21, wherein ethylene or a mixture of ethylene and at least one $\alpha$-olefin selected from the group consisting of propylene, butene-1, pentene-1, 3-methylbutene-1, 4-methyl-pentene-1, hexene-1, 1,7-octadiene, 1,4-hexadiene, and octene-1 is polymerized.

23. A catalyst comprising a supported catalyst prepared by a process of any one of Claims 1 to 15 and a cocatalyst or activator as defined in any one of Claims 17 to 20 other than any present as component (B) of the supported catalyst.

24. The use of a supported catalyst prepared by a process of any one of Claims 1 to 15 with a cocatalyst or activator in an $\alpha$-olefin polymerization.

**Patentansprüche**

1. Verfahren zur Herstellung eines Trägerkatalysators, welches das Mischen der folgenden Komponenten A, B und C in einem geeigneten inerten Verdünnugsmitel oder Lösungsmittel umfaßt:

(A) einen anorganischen Träger;

(B) ein metallhaltiges Reduktionsmittel der Formel $Al(R')_{3-m}X_m$ oder $B(R')_{3-m}X_m$, worin jedes R' unabhängig voneinander Wasserstoff oder eine Kohlenwasserstoffgruppe mit 1 bis 20 Kohlenstoffatomen ist, X Halogen ist und m einen Wert von 1 bis 2 besitzt; und

(C) eine Übergangsmetallverbindung, ausgewählt aus Titantetrakis(dialkylamid) oder Titantetrakis-(diarylamid) oder einer Kombination hiervon;

dadurch gekennzeichnet, daS die Zugabe dieser Übergangsmetallverbindung (C) verzögert wird, bis alles von diesem Träger (A) und Reduktionsmittel (B) zugesetzt worden ist, und worin die Komponenten in Mengen eingesetzt werden, die ein Atomverhältnis von Ms:Tm von 2:1 bis 160:1, ein Atomverhältnis Mr:Tm von 1:1 bis 64:1 ergeben, und worin Ms die Metallatome in dem Trägermaterial bedeutet, Mr die Metallatome in dem Reduktionsmittel bedeutet und Tm die Summe der Übergangsmetallatome in der Übergangsmetallkomponente bedeutet.

2. Verfahren nach Anspruch 1, worin die Komponenten in Mengen verwendet werden, die ein Atomverhältnis von Ms:Tm von 8:1 bis 80:1 und ein Atomverhältnis Mr:Tm von 2:1 bis 32:1 ergeben.

3. Verfahren nach Anspruch 2, worin die Komponenten in Mengen verwendet werden, die ein Atomverhältnis von Ms:Tm von 11:1 bis 40:1 und ein Atomverhältnis Mr:Tm von 4:1 bis 16:1 ergeben.

4. Verfahren nach einem der vorhergehenden Ansprüche, worin Komponente (A) ein Magnesiumdichlorid oder -dibromid ist.

5. Verfahren nach Anspruch 4, worin Komponente (A) Magnesiumdichlorid ist.

6. Verfahren nach einem der vorhergehenden Ansprüche, worin Komponente (C) eine durch die Formel $Ti(NR_2)_4$ wiedergegebene Verbindung ist, worin jedes R unabhängig voneinander eine Alkylgruppe mit 1 bis 4 Kohlenstoffatomen, eine Benzylgruppe, eine alkylsubstituierte Benzylgruppe, worin jeder Alkylrest 1 bis 4 Kohlenstoffatome besitzt, eine Phenylgruppe oder eine alkylsubstituierte Arylgruppe mit 7 bis 20 Kohlenstoffatomen, worin die Alkylreste 1 bis 14 Kohlenstoffatome besitzen, ist.

7. Verfahren nach einem der vorhergehenden Ansprüche, worin Komponente (B) Ethylaluminiumdichlorid, Diethylaluminiumchlorid, Ethylaluminiumsesquichlorid, Diethylborchlorid, Diethylaluminiumbromid, Ethylaluminiumdibromid oder eine beliebige Kombination hiervon ist.

8. Verfahren nach Anspruch 7, worin Komponente (B) Ethylaluminiumdichlorid ist.

9. Verfahren nach einem der vorhergehenden Ansprüche, worin Komponente (C) Titantetrakis-(dimethylamid), Titantetrakis(diethylamid), Titantetrakis(di-i-propylamid), Titantetrakis(di-n-propylamid), Titantetrakis(di-i-butylamid), Titantetrakis(di-n-butylamid), Titantetrakis(diphenylamid), Titantetrakis-(dibenzylamid), Titan-bis(diethylamid)-bis(dimethylamid) oder Di-i-propylamid-titan-tris(dimethylamid) oder eine beliebige Kombination hiervon ist.

10. Verfahren nach einem der vorhergehenden Ansprüche, worin die Übergangsmetallkomponente (C) zusätzlich wenigstens eine Zirkonium- oder Hafniumverbindung enthält, ausgewählt aus einem Zirkoniumtetrakis(dialkylamid), einem Zirkoniumtetrakis(diarylamid), einem Hafniumtetrakis(dialkylamid), einem Hafniumtetrakis(diarylamid) oder einer beliebigen Kombination hiervon, worin das Atomverhältnis von (Zr + Hf) zu (Ti + Zr + HF) von >0:1 bis 0.9:1 ist.

11. Verfahren nach Anspruch 10, worin

(a) die Zirkoniumverbindung durch die Formel $Zr(NR_2)_4$ wiedergegeben ist, worin jedes R unabhängig voneinander eine Alkylgruppe mit 1 bis 4 Kohlenstoffatomen, eine Benzylgruppe, eine alkylsubstituierte Benzylgruppe, worin jeder Alkylrest 1 bis 4 Kohlenstoffatome besitzt, eine Phenylgruppe oder eine alkylsubstituierte Arylgruppe mit 7 bis 20 Kohlenstoffatomen, worin die Alkylreste 1 bis 14 Kohlenstoffatome besitzen, ist;

(b) die Hafniumverbindung durch die Formel $Hf(NR_2)_4$ wiedergegeben wird, worin jedes R unabhängig voneinander eine Alkylgruppe mit 1 bis 4 Kohlenstoffatomen, eine Benzylgruppe, eine alkylsubstituierte Benzylgruppe, worin jeder Alkylrest 1 bis 4 Kohlenstoffatome besitzt, eine Phenylgruppe oder eine alkylsubstituierte Arylgruppe mit 7 bis 20 Kohlenstoffatomen, worin die Alkylreste 1 bis 14 Kohlenstoffatome besitzen, ist;

(c) das Atomverhältnis von (Zr + Hf) zu (Ti + Zr + HF) von >0:1 bis 0.8:1 ist.

12. Verfahren nach Anspruch 11, worin

(a) die Zirkoniumverbindung Zirkoniumtetrakis(dimethylamid), Zirkoniumtetrakis(diethylamid), Zirkoniumtetrakis(di-i-propylamid), Zirkoniumtetrakis(di-n-propylamid), Zirkoniumtetrakis(di-i-butylamid),Zirkoniumtetrakis(di-n-butylamid), Zirkoniumtetrakas(diphenylamid), Zirkoniumbis(diethylamid)-bis(dimethylamid) oder Di-i-propylamidzirkonium-tris(dimethylamid) oder eine beliebige Kombination hiervon ist;

(b) die Hafniumverbindung Hafniumtetrakis(dimethylamid), Hafniumtetrakis(diethylamid), Hafniumtetrakis(di-i-propylamid, Hafniumtetrakis(di-n-propylamid), Hafniumtetrakis di-i-butylamid), Hafniumtetrakis(di-n-butylamid), Hafniumtetrakis(diphenylamid), Hafniumtetrakis(dibenzylamid), Hafniumbis(diethylamid)-bis(dimethylamid) oder Di-i-propylamid-hafniumtris(dimethylamid) oder eine beliebige Kombination hiervon ist; und

(c) das Atomverhältnis von (Zr + Hf) zu (Ti + Zr + HF) von >0:1 bis 0.7:1 ist.

13. Verfahren nach einem der vorhergehenden Ansprüche, worin die Konzentration der Katalysatorkomponenten derart ist, daß die erhaltene Katalysatoraufschlämmung von 0,1 bis 0,2 molar, bezogen auf Ms, ist.

14. Verfahren nach einem der vorhergehenden Ansprüche, worin das inerte Verdünnungsmittel ausgewählt ist aus Ethan, Propan, Isobutan, n-Butan, n-Hexan, isomeren Hexanen, Isooctan, paraffinischen Mischungen von $C_8$-$C_{12}$-Alkanen, Cyclohexan, Methylcyclohexan, Dimethylcyclohexan, Dodecan, industriellen Lösungsmitteln, bestehend aus gesättigten oder aromatischen Kohlenwasserstoffen, Benzol, Toluol, Ethylbenzol, Cumol und Decalin.

15. Verfahren nach einem der vorhergehenden Ansprüche, worin dieses Mischen unter einer inerten Atmosphäre durchgeführt wird.

16. Verfahren zur Polymerisation von einem oder mehreren $\alpha$-Olefinen oder einer Mischung von einem oder mehreren polymerisierbaren, ethylenartig ungesättigten Monomeren, wobei das Verfahren die Durchführung der Polymerisation unter Lösungsbedingungen in Anwesenheit von

(I) einem Trägerkatalysator, hergestellt nach einem Verfahren irgendeines der vorhergehenden Ansprüche, und

(II) einem Cokatalysator oder einer Aktivatorverbindung umfaßt.

17. Verfahren nach Anspruch 17, worin dieser Cokatalysator oder Aktivator eine Verbindung der Formel

$Al(R')_{3-a}X_a$ , $B(R')_{3-a}X_a$ , $Mg(R')_2$ oder $Zn(R')_2$ ,

worin jedes R' unabhängig voneinander Wasserstoff oder eine $C_{1-20}$-Kohlenwasserstoffgruppe ist, X Halogen ist, und a = 0 oder 1 ist, umfaßt.

18. Verfahren nach Anspruch 17, worin dieser Cokatalysator oder Aktivator eine Verbindung der Formel $AlR'_3$ oder $BR'_3$, worin R unabhängig voneinander eine $C_{1-20}$-Alkylgruppe ist, umfaßt.

19. Verfahren nach Anspruch 17 oder Anspruch 18, worin dieser Cokatalysator oder Aktivator Diethylaluminiumchlorid, Trimethylaluminium, Tri-i-propylaluminium, Tri-i-butylaluminium Triethylaluminium, Dibutylmagnesium, Trimethylbor, Triethylbor, Diethylzink oder eine beliebige Kombination hiervon ist.

20. Verfahren nach Anspruch 19, worin dieser Cokatalysator oder Aktivator Triethylaluminium ist.

21. Verfahren nach einem der Ansprüche 16 bis 20, worin Ethylen oder eine Mischung von Ethylen und wenigstens einem $\alpha$-Olefin mit 3 bis 10 Kohlenstoffatomen polymerisiert wird.

**22.** Verfahren nach Anspruch 21, worin Ethylen oder eine Mischung von Ethylen und wenigstens einem $\alpha$-Olefin, ausgewählt aus der aus Propylen, Buten-1, Penten-1, 3-Methylbuten-1, 4-Methylpenten-1, Hexen-1, 1,7-Octadien, 1,4-Hexadien und Octen-1 bestehenden Gruppe, polymerisiert wird.

**23.** Katalysator, umfassend einen Trägerkatalysator, hergestellt nach einem Verfahren irgendeines der Ansprüche 1 bis 15, und einen Cokatalysator oder Aktivator, wie in einem der Ansprüche 17 bis 20 definiert, verschieden von irgendeiner der als Komponente (B) des Trägerkatalysators vorhandenen Komponente,

**24.** Verwendung eines Trägerkatalysators, hergestellt nach einem Verfahren irgendeines der Ansprüche 1 bis 15, mit einem Cokatalysator oder Aktivator in einer $\alpha$-Olefinpolymerisation.

**Revendications**

**1.** Procédé de préparation d'un catalyseur supporté, qui comporte le fait de mélanger, dans un diluant ou solvant inerte approprié, les composants suivants A, B et C :
    (A) un support minéral,
    (B) un agent réducteur contenant un métal, de formule

$$Al(R')_{3-m}X_m \text{ ou } B(R')_{3-m}X_m$$

dans laquelle chaque R' représente indépendanment un atome d'hydrogène ou un groupe hydrocarboné comportant de 1 à 20 atomes de carbone, X représente un atome d'halogène et m vaut de 1 à 2, et
    (C) un composé d'un métal de transition, choisi parmi un tétrakis(dialkylamino)titane, un tétrakis-(diarylamino)titane et une de leurs combinaisons,
    **caractérisé** en ce que l'on retarde l'addition dudit composé de métal de transition (C) jusqu'à ce que l'on ait ajouté la totalité dudit support (A) et de l'agent réducteur (B), les composants étant utilisés en des quantités fournissant un rapport de nombres d'atomes Ms/Tm valant de 2/1 à 160/1 et un rapport de nombres d'atomes Mr/Tm valant de 1/1 à 64/1, Ms représentant les atomes de métal présents dans le support, Mr représentant les atomes de métal présents dans l'agent réducteur, et Tm représentant le total des atomes de métal de transition présents dans le composé de métal de transition.

**2.** Procédé conforme à la revendication 1, dans lequel les composants sont utilisés en des quantités fournissant un rapport de nombres d'atomes Ms/Tm valant de 8/1 à 80/1 et un rapport de nombres d'atomes Mr/Tm valant de 2/1 à 32/1.

**3.** Procédé conforme à la revendication 2, dans lequel les composants sont utilisés en des quantités fournissant un rapport de nombres d'atomes Ms/Tm valant de 11/1 à 40/1 et un rapport de nombres d'atomes Mr/Tm valant de 4/1 à 16/1.

**4.** Procédé conforme à l'une des revendications précédentes, dans lequel le composant (A) est du dichlorure ou du dibromure de magnésium.

**5.** Procédé conforme à la revendication 4, dans lequel le composant (A) est du dichlorure de magnésium.

**6.** Procédé conforme à l'une des revendications précédentes, dans lequel le composant (C) est un composé représenté par la formule $Ti(NR_2)_4$ dans laquelle chaque R représente indépendamment un groupe alkyle comportant de 1 à 4 atomes de carbone, un groupe benzyle; un groupe benzyle substitué par un ou des groupe(s) alkyle comportant chacun de 1 à 4 atomes de carbone, un groupe phényle, ou un groupe aryle à substituant(s) alkyle, comportant de 7 à 20 atomes de carbone et dans lequel le ou les groupe(s) alkyle comporte(nt) de 1 à 14 atomes de carbone.

**7.** Procédé conforme à l'une des revendications précédentes, dans lequel le composant (B) est du dichlorure d'éthylaluminium, du chlorure de diéthylaluminium, du sesquichlorure d'éthylaluminium, du chlorure de diéthylbore, du bromure de diéthylaluminium, du dibromure d'éthylaluminium, ou toute combinaison de ces composés.

**8.** Procédé conforme à la revendication 7, dans lequel le composant (B) est du dichlorure d'éthylaluminium.

**9.** Procédé conforme à l'une des revendications précédentes, dans lequel le composant (C) est du tétrakis(diméthylamino)titane, du tétrakis(diéthylamino)titane, du tétrakis(di-i-propylamino)titane, du tétrakis(di-n-propylamino)titane, du tétrakis(di-i-butylamino)titane, du tétrakis(di-n-butylamino)titane, du tétrakis(diphénylamino)titane, du tétrakis(dibenzylamino)titane, du bis(diméthylamino)bis-(diéthylamino)-titane ou du tris(diméthylamino)-(di-i-propylamino)titane, ou toute combinaison de ces composés.

**10.** Procédé conforme à l'une des revendications précédentes, dans lequel le composant (C) apportant un métal de transition contient en outre au moins un composé de zirconium ou de hafnium, choisi parmi un tétrakis(dialkylamino)zirconium, un tétrakis(diarylamino)zirconium, un tétrakis(dialkylamino)hafnium, un tétrakis(diarylamino)hafnium, et toute combinaison de tels composés, le rapport de nombres d'atomes $(Zr + Hf)/(Ti + Zr + Hf)$ valant de plus de 0/1 à 0,9/1.

**11.** Procédé conforme à la revendication 10, dans lequel
a) le composé de zirconium est représenté par la formule $Zr(NR_2)_4$ dans laquelle chaque R représente indépendamment un groupe alkyle comportant de 1 à 4 atomes de carbone, un groupe benzyle, un groupe benzyle substitué par un ou des groupe(s) alkyle comportant chacun de 1 à 4 atomes de carbone, un groupe phényle, ou un groupe aryle à substituant(s) alkyle, comportant de 7 à 20 atomes de carbone et dans lequel le ou les groupe(s) alkyle comporte(nt) de 1 à 14 atomes de carbone ;
b) le composé de hafnium est représenté par la formule $Hf(NR_2)_4$ dans laquelle chaque R représente indépendamment un groupe alkyle comportant de 1 à 4 atomes de carbone, un groupe benzyle, un groupe benzyle substitué par un ou des groupe(s) alkyle comportant chacun de 1 à 4 atomes de carbone, un groupe phényle, ou un groupe aryle à substituant(s) alkyle, comportant de 7 à 20 atomes de carbone et dans lequel le ou les groupe(s) alkyle comporte(nt) de 1 à 14 atomes de carbone ; et
c) le rapport de nombres d'atomes $(Zr + Hf)/(Ti + Zr + Hf)$ vaut de plus de 0/1 à 0,8/1.

**12.** Procédé conforme à la revendication 11, dans lequel
a) le composé de zirconium est du tétrakis(diméthylamino)zirconium, du tétrakis(diéthylamino)-zirconium, du tétrakis(di-i-propylamino)zirconium, du tétrakis(di-n-propylamino)zirconium, du tétrakis-(di-i-butylamino)zirconium, du tétrakis(di-n-butylamino)zirconium, du tétrakis(diphénylamino)-zirconium, du bis(diméthylamino)bis(diéthylamino)zirconium ou du tris(diméthylamino)-(di-i-propylamino)zirconium, ou toute combinaison de ces composés ;
b) le composé de hafnium est du tétrakis(diméthylamino)hafnium, du tétrakis(diéthylamino)hafnium, du - tétrakis(di-i-propylamino)hafnium, du tétrakis(di-n-propylamino)hafnium, du tétrakis(di-i-butylamino)hafnium, du tétrakis(di-n-butylamino)hafnium, du tétrakis(diphénylamino)hafnium, du tétrakis-(dibenzylamino)hafnium, du bis(diméthylamino)-bis(diéthylamino)hafnium ou du tris(diméthylamino)-(di-i-propylamino)hafnium, ou toute combinaison de ces composés ;
c) le rapport de nombres d'atomes $(Zr + Hf)/(Ti + Zr + Hf)$ vaut de plus de 0/1 à 0,7/1.

**13.** Procédé conforme à l'une des revendications précédentes, dans lequel les concentrations des composants de catalyseur sont telles que dans la suspension de catalyseur résultante, la molarité de Ms vaut de 0,1 à 0,2.

**14.** Procédé conforme à l'une des revendications précédentes, dans lequel le diluant inerte est choisi parmi l'éthane liquéfié, le propane, l'isobutane, le n-butane, le n-hexane, les hexanes isomères, l'isooctane, les mélanges paraffiniques d'alcanes en $C_{8-12}$, le cyclohexane, le méthylcyclohexane, le diméthylcyclohexane, le dodécane, les solvants industriels constitués d'hydrocarbures aromatiques ou saturés, le benzène, le toluène, l'éthylbenzène, le cumène et la décaline.

**15.** Procédé conforme à l'une des revendications précédentes, dans lequel ladite opération de mélange est réalisée sous atmosphère inerte.

**16.** Procédé de polymérisation d'une ou de plusieurs alpha-oléfines, ou bien d'un mélange d'une ou de plusieurs alpha-oléfines et d'un ou de plusieurs monomères polymérisables à insaturation éthylénique,

22

lequel procédé comporte le fait d'effectuer la polymérisation en solution, en présence de

(I) un catalyseur supporté, préparé conformément à l'une quelconque des revendications précédentes, et

(II) un composé cocatalyseur ou promoteur.

17. Procédé conforme à la revendication 16, dans lequel ledit cocatalyseur ou promoteur est constitué par un composé de formule $Al(R')_{3-a}X_a$, $B(R')_{3-a}X_a$, $Mg(R')_2$ ou $Zn(R')_2$, où chaque R' représente indépendamment un atome d'hydrogène ou un groupe hydrocarboné en $C_{1-20}$, X représente un atome d'halogène et a vaut 0 ou 1.

18. Procédé conforme à la revendication 17, dans lequel ledit cocatalyseur ou promoteur est constitué par un composé de formule $Al(R')_3$ ou $B(R')_3$ où chaque R' représente indépendamment un groupe alkyle en $C_{1-20}$.

19. Procédé conforme à la revendication 17 ou 18, dans lequel ledit cocatalyseur ou promoteur est du chlorure de diéthylaluminium, du triméthylaluminium, du tri-isopropylaluminium, du tri-isobutylaluminium, du triéthylaluminium, du dibutylmagnésium, du triéthylbore, du diéthylzinc, ou toute combinaison de ces composés.

20. Procédé conforme à la revendication 19, dans lequel ledit cocatalyseur ou promoteur est du triéthylaluminium.

21. Procédé conforme à l'une des revendications 16 à 20, dans lequel on fait polymériser de l'éthylène ou un mélange d'éthylène et d'au moins une alpha-oléfine dont la molécule comporte de 3 à 10 atomes de carbone.

22. Procédé conforme à la revendication 21, dans lequel on fait polymériser de l'éthylène ou un mélange d'éthylène et d'au moins une alpha-oléfine choisie parmi le propène, le butène-1, le pentène-1, le 3-méthylbutène-1, le 4-méthylpentène 1, l'hexène-1, l'octadiène-1,7, l'hexadiène-1,4 et l'octène-1.

23. Catalyseur comprenant un catalyseur supporté, préparé selon un procédé conforme à l'une des revendications 1 à 15, et un cocatalyseur ou promoteur tel que défini dans l'une des revendications 17 à 20, autre que tout composé de ce type présent en tant que composant (B) du catalyseur supporté.

24. Emploi conjoint d'un catalyseur supporté, préparé selon un procédé conforme à l'une des revendications 1 à 15, et d'un cocatalyseur ou promoteur, pour la polymérisation d'alpha-oléfines.